# EUROPÄISCHE PATENTANMELDUNG

(11) **EP 0 997 221 A2**
(43) Veröffentlichungstag der Anmeldung: **03.05.2000**
(21) Anmeldenummer: 99120782.0
(22) Anmeldetag: 20.10.1999
(51) Int. Cl.: B23H 7/26

(54) **Verfahren und Vorrichtung zum dreidimensionalen Bearbeiten eines Werkstückes mittels elektroerosiver oder elektrochemischer Bearbeitung**

(30) Priorität: 27.10.1998 DE 19849577
(71) Anmelder: AGIE SA, 6616 Losone (CH)
(72) Erfinder: Derighetti, Renè, Dr., 6616 Losone (CH)
(74) Vertreter: von Samson-Himmelstjerna, Friedrich R., Dipl.-Phys.

(57) **Zusammenfassung**

Die Erfindung betrifft ein Verfahren und eine Vorrichtung für das elektroerosive oder elektrochemische Bearbeiten gekrümmter Flächen in einem Werkstück (2) mittels einer, im allgemeinen von der Form der gekrümmten Fläche unabhängigen Elektrode (1; 1'; 1''), bei welchem die Elektrode (1; 1'; 1'') für die Bearbeitung der gekrümmten Fläche entlang einer Vorschubrichtung (V) über die Werkstückoberfläche geführt wird. Die Erfindung zeichnet sich dadurch aus, daß die Elektrode (1; 1'; 1'') unter einem geneigten Winkel zu der Vorschubrichtung (V) über die Werkstückoberfläche geführt wird, wenn die Vorschubrichtung (V) tangential zur Werkstückoberfläche liegt.

## Beschreibung

Die Erfindung betrifft ein Verfahren und eine Vorrichtung für das dreidimensionale elektroerosive (EDM) oder elektrochemische (ECM) Bearbeiten gekrümmter Flächen in einem Werkstück mittels einer im allgemeinen von der Form der gekrümmten Fläche unabhängigen Elektrode gemäß den Oberbegriffen der Ansprüche 1 und 14.

Aus dem Stand der Technik sind Elektroerosionsvorrichtungen bekannt, bei denen eine schlanke Elektrode eine gekrümmte Fläche in einem Werkstück "fräst", wobei die Form der Elektrode unabhängig von der gekrümmten Fläche ist. Hierzu wird das Werkstück auf einem Arbeitstisch eingespannt, der ggf. in X-, Y- und Z-Richtung bewegbar ist. Eine stabförmige Elektrode wird von einer Elektrodenhalterung in X-, Y- und Z-Richtung über das Werkstück geführt. Für die Herstellung der gekrümmten Fläche wird die Elektrode in Richtung des Werkstückes geführt, Erosionsimpulse in Form von Spannungspulsen an die Elektrode gelegt und der Bearbeitungsspalt zwischen Elektrode und Werkstück gespült. Die Elektrode wird nach Art einer Fräsmaschine über die Werkstückoberfläche geführt und trägt dabei schichtweise die einzelnen zu erodierenden Abschnitte des Werkstückes ab, in denen die gekrümmte Fläche ausgebildet werden soll. Dieses Verfahren läßt einen hohen Verschleiß zu, der kompensiert wird.

Aus der US 4,504,721 ist eine solche Elektroerosionsvorrichtung bekannt, die mit einer Hohlelektrode arbeitet, durch welche die Spülflüssigkeit bei der Bearbeitung in den Bearbeitungsspalt gedrückt wird.

Aus der Zusammenfassung der japanischen Druckschrift JP-10-128 624 ist eine weitere solche Elektroerosionsvorrichtung bekannt, bei welcher die Elektrode zum Erodieren einer gekrümmten Fläche während der Vorschubbewegung in ihrem Neigungswinkel nachgeführt wird. Die Elektrode wird dabei so geführt, daß sie stets senkrecht zu der tangentialen Richtung der Vorschubrichtung steht.

Grundsätzlich ist beim Erosionsprozeß ein Elektrodenverschleiß unvermeidlich, wodurch sich die Form der Elektrode im Laufe der Bearbeitung verändert. Wird die Elektrode bei der Bearbeitung auch noch in Rotation versetzt, so ergibt sich beispielsweise das in der rechten unteren Figurenhälfte der Fig. 1a gezeigte Abnutzungsprofil der Elektrode.

Aus der EP 555 818 A1 ist beispielsweise eine solche Elektroerosionsvorrichtung bekannt, bei welcher die Elektrode in Rotation versetzt wird. Weiterhin wird dort eine Abnutzung der Elektrode während der Bearbeitung berechnet und daraus die korrigierte Vorschubrichtung abgeleitet, welche sich als eine Überlagerung der Vorschubrichtung in der X- und Y-Ebene und einer Nachführbewegung der Elektrode in Z-Richtung darstellt. Wie in dieser Druckschrift dargestellt, ändert sich das Abnutzungsprofil abhängig von mehreren Parametern. Damit ändert sich aber auch die Angriffsfläche der Elektrode abhängig von dem Abnutzungszustand. So liegt bei einer vorgegebenen Generatoreinstellung ein bestimmter Verschleiß (Abnutzungsrate) und ein entsprechendes Abnutzungsprofil vor.

Damit die Bearbeitungsgenauigkeit eingehalten wird, muß dieser Verschleiß möglichst konstant gehalten werden. Daher können bei aufeinanderfolgenden Bearbeitungsschritten in Richtung immer glatterer Oberflächen (bis hin zum Feinschlichten) nur noch immer dünner werdende Schichten abgetragen werden.

So ist es beispielsweise ebenfalls bekannt, den Elektrodenverschleiß zu messen und anschließend anhand der Meßwerte durch Nachschieben der Elektrode zu kompensieren. Aus der DE 30 36 462 A1 ist beispielsweise eine solche Elektroerosionsvorrichtung bekannt, bei welcher die Elektrode zusätzlich zu ihrer Bewegung in X-, Y- und Z-Richtung beim "Ausfräsen" der konkaven Fläche noch in Vibration versetzt wird. Die Vibrationen werden anschließend von einer Detektionseinrichtung erfaßt, wodurch die Abnutzung der Elektrode bestimmt werden kann.

Bei diesen Vorrichtungen ist der minimale Radius, der erodiert werden kann, abhängig von der Breite des Bearbeitungsspaltes und dem Radius der Elektrode. Aus diesem Grund werden gewöhnlich nur Elektroden mit einem kleinen Durchmesser, also dünne zylindrische Elektroden mit kleiner Angriffsfläche eingesetzt. Damit bei der kleinen Angriffsfläche trotzdem noch eine zufriedenstellende Abtragsrate erzielt werden kann, wird die Elektrode zur Unterstützung der Spülung in Rotation versetzt. Mit dieser Maßnahme kann die maximal zulässige Stromdichte und somit auch die Abtragsrate erhöht werden.

Dünne Elektroden haben jedoch den Nachteil, daß sie nicht genügend steif sind und sich unter der Wirkung der Spül- und Erosionskräfte verbiegen, wodurch die Bearbeitungsgenauigkeit verschlechtert wird. Außerdem kann es im Falle einer Kollision der dünnen Elektrode mit dem Werkstück, etc. zu einer plastischen Verformung der Elektrode kommen.

Insgesamt bestehen bei den bekannten Vorrichtungen also folgende Nachteile: Das Elektrodenprofil bzw. die Elektrodengeometrie ändert sich während der Bearbeitung, insbesondere tritt ein seitlicher Elektrodenverschleiß auf. Außerdem sind die Elektroden nicht genügend verbiegungssteif. Daher ist die bei den bekannten Vorrichtung erzielbare Bearbeitungsgenauigkeit stark eingeschränkt.

Aus der DE 33 36 034 C2 ist eine Funkenerosionsvorrichtung bekannt, bei der eine stabförmige Elektrode mit kreisrundem oder eckigem Querschnitt entlang einer vorprogrammierten Vorschubbahn bewegt wird. Die Vorschubbahnen verlaufen dabei schichtweise in parallelen Ebenen. Bei einem fehlerhaften Betriebszustand wird die Elektrode entlang einer zuvor für jeden Bearbeitungspunkt bestimmten Rückzugsbahn von der Bearbeitungsfläche wegbewegt. Durch die im voraus berechneten Rückzugsbahnen ergeben sich keine unnötigen Zeitverzögerungen bei der Rückzugsbewegung.

Aus der DE 32 03 605 A1 ist ferner noch eine Funkenerosionsvorrichtung mit einer drehbaren Elektrode bekannt. Die Elektrode weist parallel zu ihrer Längsachse verlaufend mehrere unterschiedliche Bearbeitungsseiten (unterschiedliches Profil) auf, die je nach Drehstellung der Elektrode für die Bearbeitung des Werkstück herangezogen werden können.
Der Erfindung liegt die Aufgabe zugrunde, das Elektrodenprofil während der Bearbeitung weitestgehend konstant zu halten.

Die Erfindung löst diese Aufgabe jeweils mit den Gegenständen der Ansprüche 1 und 14. Bevorzugte Ausführungsbeispiele der Erfindung sind in den Unteransprüchen beschrieben.

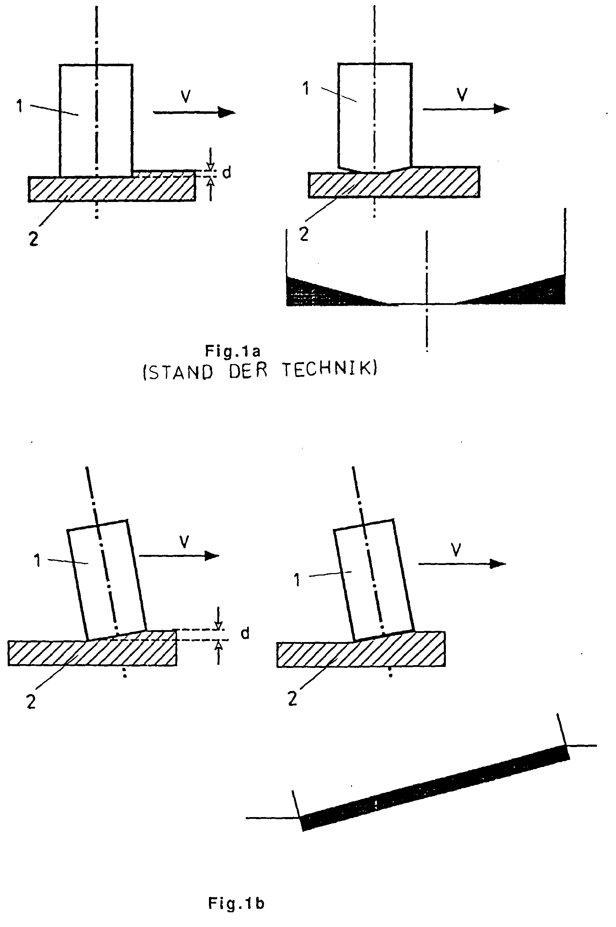

Nach Anspruch 1 wird bei einem gattungsgemäßen Verfahren bei einem tangential zur Werkstückoberfläche erfolgenden Vorschub die Längsachse der Elektrode derart gegen die Normale auf die Werkstückoberfläche geneigt wird, daß sie an ihrem dem Werkstück abgewandten Ende entgegen der Vorschubrichtung ausgelenkt ist. Vorteilhaft ist hierdurch die Angriffsfläche der Elektrode gegenüber derjenigen aus dem Stand der Technik doppelt so groß. Bei gleicher Stromdichte kann dadurch auch vorteilhaft der Strom verdoppelt und damit die Abtragsrate mehr als verdoppelt werden. Dies ist beispielsweise besonders deutlich aus einem Vergleich der Figuren 1a und 1b ersichtlich. Bei der in Fig. 1a gezeigten Elektrode aus dem Stand der Technik liegt die Angriffsfläche an der Elektrodenunterseite lediglich - in Vorschubrichtung der Elektrode gesehen - im vorderen Abschnitt. Aufgrund der Abnutzung der Elektrode am vorderen Abschnitt und der gleichzeitigen Rotation dieses Abschnittes nach hinten ist der rückwärtige Teil der Elektrodenunterseite nicht mehr an der Erosion beteiligt. Bei der Erfindung ist hingegen aufgrund der Neigung der Längsachse der Elektrode bezüglich der Normalen auf die Werkstückoberfläche die gesamte Elektrodenunterseite an der Erosion beteiligt.

Dadurch verbessern sich aber auch die Spülbedingungen entscheidend. Der maximale Druckabfall befindet sich nicht mehr wie bei der Elektrode aus dem Stand der Technik hinten in dem Abschnitt des breiteren nicht für die Erosion genutzten Bearbeitungsspaltes, sondern über den gesamten aktiven Bearbeitungsspalt gleichmäßig verteilt.

Ein entscheidender Vorteil ist auch, daß sich das Profil der Elektrode während ihrer Abnutzung nur noch unwesentlich ändert. Die Elektrode nutzt sich gleichmäßig an ihrer Unterseite ab, wodurch der Verschleiß durch entsprechendes Nachschieben der Elektrode einfach kompensiert werden kann. Das Profil wird dabei nicht verändert.

Somit kann auch der entscheidende Vorteil einer Elektroerosionsvorrichtung gegenüber mechanischen Fräsvorrichtungen weiterhin genutzt werden, nämlich keine relative Bewegung zwischen Werkstück du Werkzeug in Form einer Rotation o.ä. zu benötigen. Insbesondere dieser Vorteil konnte bei den bekannten Elektroerosionsvorrichtungen nicht genügend genutzt werden, da aufgrund des ungleichmäßigen Verschleißes der Elektrode diese grundsätzlich rotiert werden mußte. Bei der Erfindung ist eine solche Rotation nicht mehr erforderlich.

Hiermit eröffnet sich aber ein weiterer großer Vorteil der Erfindung, nämlich insbesondere mit prismatischen Elektroden arbeiten zu können, die während der Bearbeitung nicht rotiert werden dürfen. Bei einer geeigneten Prismenform (mit eckigen Außenkanten) können gegenüber dem Stand der Technik somit vorteilhaft sehr viel kleinere Radien erodiert werden, beispielsweise sehr viel engere Ecken, etc..

Außerdem müssen für das Erodieren kleiner Radien vorteilhaft nicht mehr besonders dünne Elektroden benutzt werden. Bei der Verwendung prismatischer Elektroden können diese im Querschnitt groß belassen bleiben, wodurch eine größere Angriffsfläche und insgesamt eine größere Steifigkeit der Elektrode erzielt wird. Damit können wiederum die dreidimensionalen Oberflächen schneller und genauer abgetragen werden.

Unter dem Begriff "Vorschubrichtung der Elektrode" wird die Richtung verstanden, in welche die Elektrodenhalterung zum Nachfahren einer vorgegebenen Erodierstrecke bewegt wird. Anstelle oder zusätzlich zu der Bewegung der Elektrodenhalterung kann auch der Werkzeugtisch mit aufgespanntem Werkzeug entsprechend bewegt werden.

Unter dem Begriff "Werkstückoberfläche" wird der sich lokal im Bereich der Elektrode befindliche, ggf. gekrümmte unbearbeitete Oberflächenabschnitt verstanden, der als nächstes bearbeitet werden soll.

Um eine gekrümmte Oberfläche nach dem erfindungsgemäßen Verfahren zu realisieren, ist mindestens eine weitere Achse zur Neigung der Elektrode erforderlich.

Im allgemeinen ist die Form der Elektrode unabhängig von der Form der zu erodierenden gekrümmten Fläche. In manchen Fällen kann es jedoch vorteilhaft sein, die Elektrode entsprechend der Form eines besonders schwierig zu erodierenden Abschnittes der gekrümmten Fläche anzupassen. Das bedeutet, daß die Elektrode für kleinere Abschnitte der gekrümmten Fläche sehr wohl abhängig von deren Form sein kann.

Bevorzugt wird der Auslenkwinkel abhängig von der Bearbeitungsqualität eingestellt (Anspruch 2), wobei der Auslenkwinkel besonders bevorzugt beim letzen Feinbearbeitungsschritt gegen Null zurückgestellt wird (Anspruch 3). Vorteilhaft kann hiermit die Abtragsrate für die gröberen Bearbeitungsschritte durch entsprechendes stärkeres Auslenken bzw. Neigen der Elektrode erhöht werden, wobei für die feinen Bearbeitungsschritte dieser Auslenkwinkel zugunsten der Bearbeitungsgenauigkeit gesenkt wird.

Bevorzugt wird schichtweise in die Tiefe des Werkstückes Material abgetragen (Anspruch 4).

Bevorzugt wird bei einer Prozeßentartung die Elektrode in Richtung ihrer Längsachse von der Werkstückoberfläche abgehoben und anschließend tangential zur Werkstückoberfläche auf die Werkstückoberfläche wieder aufgesetzt (Anspruch 5). Mit dieser Maßnahme kann die Prozeßentartung besonders schnell unterbrochen, und die Erosion progressiv wieder aufgenommen werden.

Bevorzugt wird die Elektrode während der Bearbeitung in Zeitintervallen oder dauernd rotiert (Anspruch 6). Dabei wird bevorzugt im Falle elektroerosiver Bearbeitung mit einer prismatischen Elektrode die Elektrode vor der Rotation von der Bearbeitungsfläche zurückgezogen (Anspruch 7). Damit wird vorteilhaft auch der letzte verbleibende ungleichmäßige Verschleiß der Elektrode kompensiert.

Zur vorteilhaften Erhöhung der Spülflüssigkeitsgeschwindigkeit wird die Elektrode bei der elektroerosiven oder elektrochemischen Bearbeitung in Vibration versetzt (Anspruch 9).

Bevorzugt wird die Elektrode zentral gespült, wobei für die Spülung die Spülflüssigkeit durch die Elektrode eingesaugt und der Spüldruck gesteuert wird (Anspruch 10). Vorteilhaft kann mit dieser Kombination aus zentraler Spülung und Ansaugen der Spülflüssigkeit einerseits eine hohe Spülflüssigkeitsgeschwindigkeit und andererseits ein vorwiegend im Erosionsspalt vorliegender Druckabfall erzielt werden.

Bevorzugt wird im Falle elektroerosiver Bearbeitung die Dauer der Erosionsimpulse, insbesondere bei einer Druckspülung, etwas geringer als die Durchlaufzeit einer Entladung gewählt, welche am Elektrodenzentrum entstehen und sich am Elektrodenrand selbständig löschen würde (Anspruch 11). Vorteilhaft können mit dieser Maßnahme die Erosionsimpulse möglichst lang gewählt werden, bis fast hin zu einem Gleichstromerodieren.

Bevorzugt wird die Erosionsspannung hinsichtlich einer Änderung der Lichtbogenspannung und/oder der überlagerten Spannungswelligkeit überwacht und bei Abweichung vom Sollwert wird der Erosionsimpuls gelöscht (Anspruch 12). Vorteilhaft kann hiermit eine Beschädigung der Elektrode vermieden werden.

Bevorzugt ist die Elektrode mit einer seitlichen Isolationsschicht beschichtet (Anspruch 17). Vorteilhaft wirkt diese Isolationsschicht, die bevorzugt besonders dünn ausgebildet wird, einer Beschädigung der Elektrode an ihrer Seitenwand entgegen. Eine derartige Elektrode kann auch unabhängig von der erfindungsgemäßen Vorrichtung eingesetzt werden, beispielsweise in bekannten Elektroerosionsvorrichtungen, um dort den seitlichen Verschleiß der Elektroden zu vermindern.

Nachfolgend werden weitere Vorteile und Merkmale der Erfindung anhand bevorzugter Ausführungsbeispiele mit bezug auf die beigefügte Zeichnung näher erläutert. In der Zeichnung zeigen:
- Fig. 1a: eine rotierende Elektrode beim Abtragen einer Schicht von einem Werkstück zu Beginn (linke Figurenhälfte) und im Verlaufe der Bearbeitung (rechte Figurenhälfte) gemäß einem bekannten Verfahren sowie das entsprechende Abnutzungsprofil der Elektrode (untere Figurenhälfte);
- Fig. 1b: analog zu Fig. 1a eine entsprechende Elektrode beim Abtragen der Schicht gemäß dem erfindungsgemäßen Verfahren;
- Fig. 2a: eine Elektrode beim Erodieren einer Ecke in Schnittansicht und Aufsicht gemäß einem bekannten Verfahren;
- Fig. 2b: eine Elektrode mit quadratischem Querschnitt beim Erodieren derselben Ecke gemäß dem erfindungsgemäßen Verfahren;
- Figuren 3a und 3b: jeweils in der linken Figurenhälfte in Aufsicht und in der rechten Figurenhälfte das Erodieren eines schmalen Grabens gemäß dem bekannten bzw. dem erfindungsgemäßen Verfahren;
- Fig. 4: die Rückzugsbewegung der Elektrode im Falle einer Prozeßentartung und die anschließende Wiederaufsetzbewegung der Elektrode zum Fortfahren der Bearbeitung
- Fig. 5: das Messen des Elektrodenverschleißes mittels einer Meßkugel;
- Fig. 6: eine spezielle Elektrodenhalterung mit eingebautem piezoelektrischen Translator, um die Elektrode in Vibration zu versetzen;
- Fig. 7: eine speziell für das Ansaugen der Spülflüssigkeit durch die Elektrode ausgebildete Elektrodenhalterung;
- Fig. 8: eine Elektrode mit einer seitlichen Isolationsschicht.

Nachfolgend werden für eine leichtere Lesbarkeit der Beschreibung Begriffe, wie "oben", "unten" etc. verwendet, die jedoch nicht einschränkend zu verstehen sind. Ferner wird ein Hauptachsensystem einer Elektroerosionsvorrichtung so gewählt, daß die X- und Y-Hauptachsen bei einer auf dem Boden aufgestellten Vorrichtung jeweils horizontal verlaufen und die Z-Hauptachse entsprechend vertikal. Dies ist jedoch nicht einschränkend zu verstehen. Für beliebige anders ausgerichtete Koordinatensysteme kann eine Transformation in das hier verwendetet Koordinatensystem durchgeführt werden, damit die in den gesamten Unterlagen verwendeten Definitionen der Vorschubrichtung und der Elektrodenführung weiterhin gelten.

In Fig. 1a ist eine Elektrode 1 beim schichtweisen Bearbeiten eines Werkstückes 2 zu Beginn und im Verlaufe der Bearbeitung gemäß einem bekannten Verfahren gezeigt. In der linken Figurenhälfte ist die Elektrode 1 auf das Werkstück 2 aufgesetzt. Im weiteren Verlauf der Bearbeitung soll die Schichtdicke d abtragen. Hierzu wird die Elektrode 1 entlang der Vorschubrichtung V bewegt. In der rechten Figurenhälfte ist die Bearbeitung bereits fortgeschritten, wodurch die Elektrode 1 eine Abnutzung erfahren hat. Das Abnutzungsprofil ist unterhalb der rechten Figurenhälfte vergrößert dargestellt. Die schwarzen Bereiche bedeuten dabei abgetragene Abschnitte der Elektrode 1. Das symmetrische Abnutzungsprofil stammt von einer Rotation der Elektrode 1.

In Fig. 1b ist die entsprechende Elektrode 1 beim Abtragen der Schichtdicke d von dem Werkstück 2 zu Beginn und im Verlaufe der Bearbeitung entsprechend dem erfindungsgemäßen Verfahren gezeigt.

Nachfolgend wird anhand eines Beispiels eine häufig auftretende Werkstückbearbeitung erläutert. Hierzu werden folgende Definitionen eingeführt: Unter der XY-Hauptebene wird die Ebene verstanden, welche durch die X- und die Y-Hauptachse der Werkzeugmaschine aufgespannt wird. Üblicherweise werden die Hauptachsen auf einer Elektroerosionsvorrichtung so definiert, daß sich die horizontale Werkstückebene, d.h. die horizontale Werkstückaußenfläche eines auf der Vorrichtung aufgespannten Werkstückes parallel zur XY-Hauptebene erstreckt. Der Vorschub der Elektrodenhalterung beim dreidimensionalen Erodieren innerhalb dieses Werkstück erfolgt beim schichtweisen Abtragen dann ebenfalls parallel zu dieser Hauptebene.

Die Elektrode wird zum Kompensieren ihres Verschleißes wie auch zum Erodieren in die Tiefe (in eine Ausnehmung oder entlang deren vertikale Innenwand) oder entlang einer vertikalen Außenfläche des Werkstückes entlang der Z-Achse bewegt. Werden beispielsweise Rampen, also schiefe Ebenen auf einer Werkstückoberfläche erodiert, so erfolgt der Vorschub nicht mehr parallel zur XY-Hauptebene, sondern zusätzlich noch entlang der Z-Hauptachse. Wird beispielsweise eine Seitenwand eines tieferen Grabens in dem Werkstück erodiert, so verläuft im allgemeinen die Vorschubrichtung parallel zur z-Hauptachse. Die Vorschubrichtung verläuft in beiden Figuren 1a und b in Richtung der X-Hauptachse, also parallel zur XY-Hauptebene.

Bei dem bekannten Verfahren ist die Längsachse der Elektrode 1 senkrecht zu der Vorschubrichtung V ausgerichtet, während beim erfindungsgemäßen Verfahren die Längsachse der Elektrode 1 bereits unter einem größeren Winkel als 90° zur Vorschubrichtung V auf die Werkstückoberfläche aufgesetzt und bei der weiteren Bearbeitung entsprechend geneigt über die Werkstückoberfläche bewegt wird. Unterhalb der rechten Figurenhälfte der Figur 1b ist das Abnutzungsprofil der Elektrode 1 beim erfindungsgemäßen Verfahren gezeigt. Wie daraus ersichtlich ist, findet ein gleichmäßiger Abtrag der Elektrode 1 über deren gesamte Unterseite statt.

Das erfindungsgemäße Neigen der Längsachse der Elektrode 1 gegenüber der Normalen auf die Werkstückoberfläche, wenn die Vorschubrichtung V tangential zur Werkstückoberfläche liegt, umfaßt damit auch das Neigen der Längsachse der Elektrode 1 gegenüber der Normalen auf die Werkstückoberfläche, wenn die Vorschubrichtung parallel zur XY-Hauptebene oder parallel zur Z-Hauptachse liegt.

In Fig. 2a ist die Elektrode 1 beim Erodieren einer Ecke mit dem Radius r in Schnittansicht und Aufsicht gemäß einem bekannten Verfahren gezeigt. Die Elektrode 1 steht wiederum senkrecht zur Vorschubrichtung V.

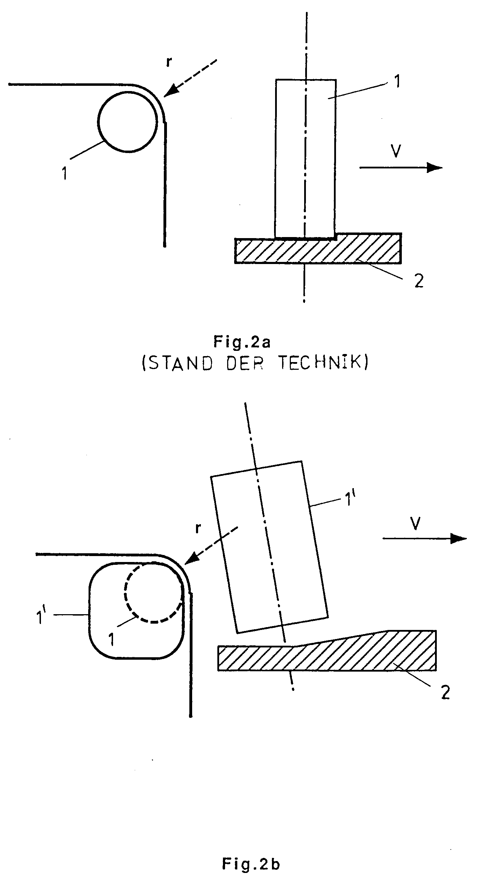

In Fig. 2b ist analog zu Fig. 2a eine Elektrode 1' mit einem quadratischem Querschnitt beim Erodieren derselben Ecke gemäß dem erfindungsgemäßen Verfahren gezeigt. Bei dem erfindungsgemäßen Verfahren muß die Elektrode 1' nicht für eine Beibehaltung einer gleichmäßigen Abnutzung oder für eine Erhöhung der Spülung rotiert werden, so daß eine Kante der quadratischen Elektrode 1' die Ecke erodieren kann. Für einen unmittelbaren Größenvergleich ist in der linken Figurenhälfte der Fig. 2b der Querschnitt der analog im bekannten Verfahren eingesetzten rotierenden Elektrode 1 gezeigt. Der Querschnitt der quadratischen Elektrode kann viel größer gewählt werden, obwohl derselbe Eckenradius geschnitten wird, wodurch sowohl die Steifigkeit als auch die Angriffsfläche größer und damit die Bearbeitungsgenauigkeit und -geschwindigkeit erhöht werden.

Die Bearbeitung einer größeren Ausnehmung in dem Werkstück 2 kann gemäß dem erfindungsgemäßen Verfahren beispielsweise folgendermaßen erfolgen: Die Elektrode 1 wird geneigt zur Normalen auf die Werkstückoberfläche von einer Kante der Ausnehmung bis zur gegenüberliegenden Kante bewegt, während mehrere solcher Bahnen so parallel nebeneinander gelegt werden, daß die durch die Abtragung frei gewordene Fläche möglichst keine Riffen aufweist. An den Kanten wird die Elektrode 1 jeweils in die Senkrechte geschwenkt, so daß an der Kante keine Rampe zur Seitenwand übrigbleibt. Bis zur benachbarten parallelen Bahn kann die Elektrode 1 entlang der Seitenkante der Ausnehmung aufrecht, d.h. senkrecht zur Vorschubrichtung V bewegt werden, damit die Seitenwand möglichst senkrecht ausgebildet wird. Wird anschließend die benachbarte Bahn in entgegengesetzter Vorschubrichtung V erodiert, wird die Elektrode 1 wiederum entsprechend geneigt, so daß die Elektrodenunterseite vollständig gegen die zu erodierende Schicht anliegt.

Die optimalen Elektrodenbewegungen, beispielsweise um eine Ecke zu erodieren, sind vorprogrammiert.

Sollte ein tiefes Loch parallel zur Z-Hauptachse in das Werkstück 2 erodiert werden, so wird die Elektrode 1 bei entsprechendem Größenverhältnis von Loch- zu Elektrodendurchmesser ebenfalls gegenüber der Z-Hauptachse geneigt geführt, damit dieselbe vorteilhafte vollständige Ausnutzung der Elektrodenunterseite für das Erodieren ausgenutzt wird. Erlaubt das Größenverhältnis ab einer bestimmten Tiefe keine solche Neigung der Elektrode 1 gegenüber der Z-Hauptachse mehr, so wird die Elektrode 1 wieder parallel zur Z-Hauptachse geschwenkt.

Die entsprechende Elektroerosionsvorrichtung muß für eine solche Bewegungsfreiheit der Elektrodenhalterung wenigstens fünf Freiheitsgrade aufweisen: drei für die Bewegung in X-, Y- und Z-Richtung, eine zum Schwenken der Elektrode 1 und eine zum Rotieren der Elektrodenhalterung, damit die Schwenkebene beliebig gedreht werden kann.

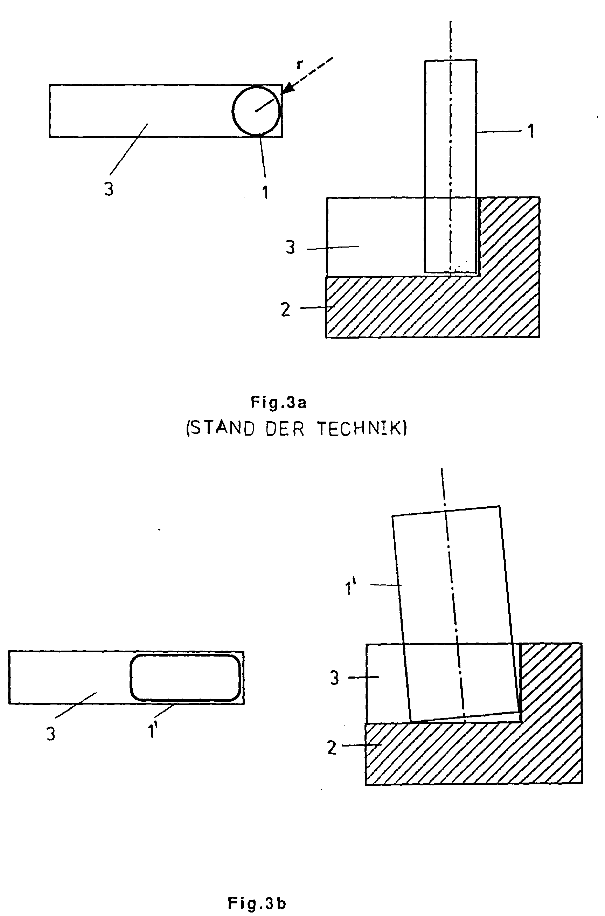

In den Figuren 3a und 3b ist in Aufsicht (linke Figurenhälfte) und Querschnittsansicht (rechte Figurenhälfte) jeweils das Erodieren eines schmalen Grabens 3 gemäß dem bekannten und dem erfindungsgemäßen Verfahren gezeigt. Bei dem bekannten Verfahren wird der Graben 3 der Breite b mit einer zylindrischen Elektrode 1 erodiert, so daß die erzielbaren Eckenradien r des Grabens 3 aufgrund der Elektrodengeometrie kleiner oder gleich der halben Grabenbreite sind. Bei dem erfindungsgemäßen Verfahren kann bei gleicher sonstiger Bearbeitungsqualität aufgrund des Wegfalls des Rotationserfordernis mit einer rechteckförmigen Elektrode 1' gearbeitet werden. Die hierbei erzielbaren Eckenradien hängen nur noch von der Kantenschärfe der rechteckförmigen Elektrode 1' ab und können daher sehr viel kleiner, d.h. eckiger sein.

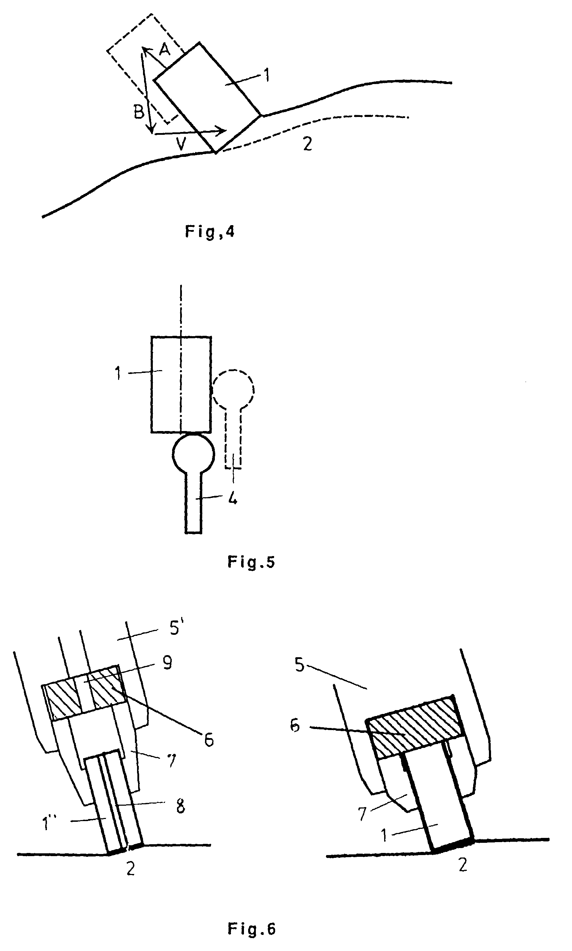

Die Führung des Erosionsprozesses erfolgt wie bei dem bekannten Senkerodieren. Bei einer Prozeßentartung wird die Elektrode 1 in einer geeigneten Richtung entlang ihrer Längsachse von der Bearbeitungsoberfläche abgehoben, damit die Erosionsseite der Elektrode 1 über ihren gesamten Querschnitt möglichst schnell von der Bearbeitungsfläche entfernt wird. In anderen Worten sollen alle Abschnitte der Erosionsseite möglichst schnell von ihrem nächstgelegenen Bearbeitungsabschnitt entfernt werden. Dieser Vorgang ist in Figur 4 durch den Pfeil A angedeutet. Der Ort der Elektrode 1 nach dem Rückzug ist gestrichelt dargestellt. Diese Richtung wird aus dem Erosionsprofil der Elektrode 1 automatisch abgeleitet und adaptiv verändert, um die Erosionsunterbrechungen zu minimalisieren.

Für die Wiederaufnahme der Erosion wird die Elektrode 1 tangential auf die Bearbeitungsfläche aufgesetzt, was in Fig. 4 durch den Pfeil B dargestellt ist. Anschließend wird die Elektrode 1 bei der Bearbeitung wieder in Vorschubrichtung V bewegt und gleichzeitig entsprechend geneigt, bis sie die mit durchgezogenen Linien dargestellte Position wieder erreicht hat. Bei der Wiederaufnahme der Bearbeitung kann die Impulsfrequenz progressiv gesteigert werden.

Gegebenenfalls kann die Elektrode 1 in vorgegebenen Zeitintervallen rotiert werden, um die unvermeidlichen restlichen Unregelmäßigkeiten in ihrer Abnutzung zu kompensieren. Für zylindrische Elektroden 1, d.h. mit rundem Querschnitt, kann die Rotation dabei während der Bearbeitung durchgeführt werden, während für alle anderen Elektrodenformen, insbesondere für Elektroden mit prismatischem Querschnitt, die Elektrode 1' vor der Rotation erst von der Bearbeitungsfläche zurückgezogen werden muß. Im allgemeinen kann aber für jede Elektrodenart, einschließlich zylindrischer Elektroden 1, 1' die Rotation mit der Rückzugsbewegung kombiniert werden. Die Amplitude und die Richtung der Rückzugsbewegung kann dabei aus der zu erodierenden Geometrie abgeleitet werden.

Grundsätzlich tritt auch beim erfindungsgemäßen Verfahren ein Verschleiß der Elektrode 1 auf, wie in Fig. 1b gezeigt. Dieser wird durch ein entsprechendes Nachschieben der Elektrode 1 entlang ihrer Längsachse automatisch kompensiert, indem die Nachschubrate aus dem Produkt von Erosionsstrom und Erosionszeit abgeleitet wird. Der Proportionalitätsfaktor ist für jede Elektrodenart abhängig von Material, Form und Querschnitt als Technologieparameter gespeichert.

Die berechnete Verschleißrate kann in Intervallen durch Messung der Elektrode 1 an einer Meßkugel 4 (einem Meßtaster oder einem sonstigen Meßmittel an der Vorrichtung) während der Gesamtbearbeitung überprüft werden, wodurch eine höhere Bearbeitungsgenauigkeit erzielt werden kann. Dies ist in Fig. 5 schematisch anhand der Elektrode 1 und der Meßkugel 4 dargestellt. Wie aus dieser Figur ersichtlich wird, mißt die Meßkugel 4 nicht nur die Länge der Elektrode 1, sondern auch deren seitliches Abnutzungsprofil.

In Fig. 6 ist gezeigt, wie die durch den Erosionsspalt fließende Stromdichte erhöht werden kann. Hierzu ist in eine Elektrodenhalterung 5, 5' ein piezoelektrischer Translator 6, 6' eingebaut, welcher die Elektrode 1, 1'' über einen Halterabschnitt 7 in Vibration versetzen kann. Durch die Vibration der Elektrode 1, 1'' kann die Spülmenge und damit auch die Stromdichte erhöht werden. Die Elektrodenvibration ist insbesondere für Elektroden 1, 1'' mit kleinem Querschnitt und damit kleiner Angriffsfläche geeignet, da bei diesen Elektroden 1, 1'' die hydrodynamischen Kräfte klein bleiben. Bei solchen Elektroden 1, 1'' muß auch die Elektrodenhalterung 5, 5' (Pinole) nicht besonders steif ausgebildet sein, da eine Verbiegung aufgrund hydrodynamischer Kräfte gering ist.

Anstelle des piezoelektrischen Translators 6, 6' können auch andere geeignete Mittel verwendet werden. Erstere sind jedoch aufgrund ihrer hohen erzielbaren Vibrationsfrequenz besonders geeignet, die vorteilhaft noch oberhalb der Eigenfrequenz der Elektroerosionsvorrichtung liegen kann. In Fig. 6 ist in der linken Figurenhälfte eine entsprechende Elektrodenhalterung 5' für eine Hohlelektrode 1'' mit Spülkanal 8 gezeigt, wobei der piezoelektrische Translator 6' ebenfalls eine Innenbohrung 9 aufweist, durch welche die Spülflüssigkeit strömen kann. In der rechten Figurenhälfte von Fig. 6 ist hingegen eine Elektrodenhalterung 5 für eine massive Elektrode 1 ohne Spülkanal gezeigt, bei welcher der piezoelektrische Translator 6 keine Innenbohrung aufweist.

Wie bereits erwähnt können bei dem erfindungsgemäßen Verfahren auch Elektroden 1'' mit einer zentralen Spülung und Spüldrucksteuerung eingesetzt werden. Vorteilhaft kann hierbei die Stromdichte weiter erhöht werden, was zu einer überproportionalen Erhöhung der Abtragsrate führt. In Kombination mit dem erfindungsgemäßen Verfahren ist die Wirkung der zentralen Spülung optimal, da der Druckabfall vorwiegend im Erosionsspalt stattfindet. Dies ist am einfachsten aus einem Vergleich der rechten Figurenhälften der Figuren 1a und 1b ersichtlich. Bei der bekannten Elektrodenführung ist durch die symmetrische Abnutzung der rotierenden Elektrode 1 der Erosionspalt links am größten. Dort fließt dementsprechend auch die größte Spülflüssigkeitsmenge aus und führt dort zu dem größten Druckabfall. Bei dem erfindungsgemäßen Verfahren ist der Erosionsspalt über die gesamte Elektrodenunterseite gleich groß, so daß der Druckabfall über die gesamte Unterseite weitgehend konstant ist.

Die Elektroerosionsvorrichtung kann derart ausgebildet sein, daß sie im Bearbeitungsspalt eine Spülflüssigkeitsgeschwindigkeit von mehreren Metern pro Sekunde erzeugt. Mit dieser Maßnahme kann die Abtragsrate gegenüber herkömmlichen Senkerosionsvorrichtungen um den Faktor 20 gesteigert werden. Für das Erzeugen dieser hohen Spülflüssigkeitsgeschwindigkeit kann entweder ein künstlicher Außendruck (z.B. durch einen geeigneten Druckbehälter) aufgebaut werden oder die Spülflüssigkeit durch den Spülkanal einer (ggf. kurzen und einfach gestalteten) Hohlelektrode mit Spülkanal abgesaugt werden. Bei beiden Maßnahmen läuft der kontrollierte Lichtbogen vom Elektrodenrand in Richtung Spülkanal innerhalb der Elektrode und wird im Spülkanal sicher gelöscht (DE 27 33 430 C2). Der Lichtbogen wird nämlich von der Spülflüssigkeit mitgerissen und damit in die Länge gezogen. Bei ausreichender Länge des Lichtbogens löscht sich dieser von selbst.

Mit der ersten Maßnahme können so hohe Spülflüssigkeitsgeschwindigkeiten erzielt werden, daß sogar mit Gleichstrom erodiert werden kann. Allerdings behindert das Vorsehen eines geeigneten Druckbehälters das dreidimensionale Erodieren. Mit der letzteren Maßnahme tritt dieser Nachteil nicht auf, wobei trotz alledem brauchbare Geschwindigkeiten erreichbar sind.

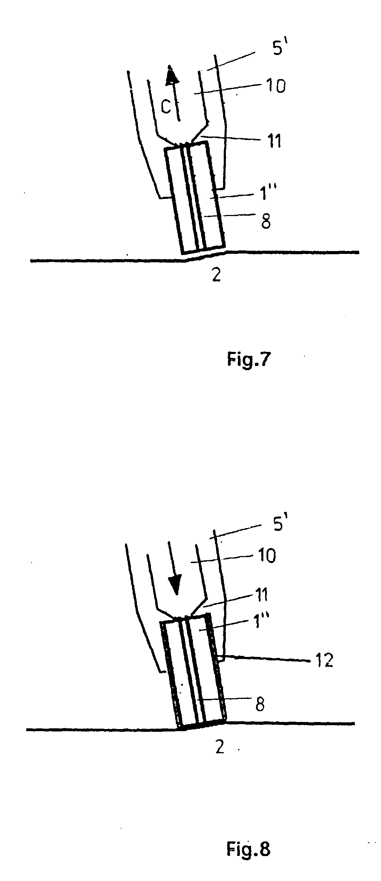

Die Elektrodenhalterung 5 kann entsprechend konstruktiv ausgebildet sein, daß ein Druckabfall an der Verbindungsstelle zwischen Elektrode 1'' und Elektrodenhalterung 5 klein gehalten wird. In Fig. 7 ist schematisch angedeutet, wie eine solche Elektrodenhalterung 5' ausgebildet sein könnte. Die Oberseite des Kragens 11 ist konisch sich nach oben öffnend ausgebildet, damit sich oberhalb eines Kragens 11 keine Erosionspartikel anstauen. Der in Fig. 7 eingezeichnete Pfeil C gibt die Strömungsrichtung der Spülflüssigkeit an.

Grundsätzlich hat die Spülung von der Mitte der Elektrodenunterseite in Richtung Elektrodenrand den Vorteil, die Bewegungsfreiheit zu wahren. Dabei kann der Spüldruck immer derart erhöht werden, daß die erforderliche Dielektrikumsgeschwindigkeit im Erosionsspalt erzielt wird. Es ist jedoch nicht immer möglich, den Gleichstrom-Lichtbogen am äußeren Elektrodenrand sicher zu löschen. Dies führt dazu, daß die Elektrode 1'' an ihrem Rand beschädigt, bzw. übermäßig abgenutzt wird. Um diesem Umstand entgegenzuwirken, wird die Dauer der Erosionspulse derart gesteuert, daß sie möglichst lang, jedoch immer kürzer als die Durchlaufzeit einer Entladung ist, die am Elektrodenzentrum entstehen und sich am Elektrodenrand selbständig löschen würde.

Es kann ebenfalls zusätzlich oder alternativ eine Änderung der Lichtbogenspannung verfolgt werden, und der Erosionsimpuls bei Abweichung vom Sollwert gelöscht werden. Diese Abweichung vom Sollwert kann durch Auswertung der Spannung verfolgt werden, beispielsweise anhand des Amplitudenverlaufes und/oder anhand der Amplitude und Frequenz der überlagerten Spannungswelligkeit.

Für einen geringen Elektrodenverschleiß können vorteilhaft Graphit-Elektroden eingesetzt werden. Außerdem kann die Elektrode 1'' mit einer seitlichen Isolationsschicht 12 beschichtet werden, die während kurzer Zeiten hohe Temperaturen aushalten kann. Bei der Bearbeitung wird diese Isolationsschicht 12 im Zuge der Abnutzung der Elektrode 1'' ebenfalls durch thermische und mechanische Wirkung abgetragen. Hierzu ist die Isolationsschicht besonders dünn ausgebildet. In Fig. 8 ist eine solche Elektrode 1'' mit einer seitlichen Isolationsschicht 12 gezeigt.

Die Steuerung der Elektroerosionsvorrichtung kann derart ausgelegt sein, daß die Abmessungen, die Form und/oder die Information über die Vorschubrichtung der Elektrode 1 direkt von einem CAD-System entnommen und von einer geeigneten Software zur Steuerung der Werkzeugmaschine verwendet wird. Hierdurch kann die Bearbeitungszeit reduziert werden. Die Abmessungen der Elektrode 1 bzw. der grundsätzlich auf einer bestimmten Elektroerosionsvorrichtung verwendbaren Elektroden (beispielsweise in einem Elektrodenmagazin enthaltene Elektroden, die automatisch von der Werkzeugmaschine je nach Bedürfnis ausgewechselt werden) werden ebenso wie die erforderlichen Technologieparameter abgespeichert. Zu diesen Technologieparametern gehört auch die optimale Elektrodenneigung bzw. Neigungsänderung, um elementaren Formen, wie innere und äußere Ecken zu bearbeiten.

Alternativ oder zusätzlich kann die Vorschubbewegung der Elektrode 1 auch während der Bearbeitung sozusagen online vorberechnet werden. Die gesamte Steuerung kann so ausgelegt sein, daß sie zur Zeit in der Elektroerosionsvorrichtung nicht verfügbare Elektrodenformen und/oder -abmessungen empfiehlt, welche zu einer Verkürzung der Bearbeitungszeit o.ä. führen könnten. Stehen diese Formen und/oder Abmessungen grundsätzlich nicht zur Verfügung, so kann die Steuerung die Bearbeitung automatisch mit den verfügbaren Elektroden 1 durchführen.

## Patentansprüche

1. Verfahren für das elektroerosive oder elektrochemische Bearbeiten gekrümmter Flächen in einem Werkstück (2) mittels einer, im allgemeinen von der Form der gekrümmten Fläche unabhängigen Elektrode (1; 1'; 1''), bei welchem:
- die Elektrode (1; 1'; 1'') für das Bearbeiten der gekrümmten Fläche entlang einer Vorschubrichtung (V) über die Werkstückoberfläche geführt wird,
dadurch gekennzeichnet, daß
- bei einem tangential zur Werkstückoberfläche erfolgenden Vorschub die Längsachse der Elektrode (1; 1'; 1'') derart gegen die Normale auf die Werkstückoberfläche geneigt wird, daß sie an ihrem dem Werkstück abgewandten Ende entgegen der Vorschubrichtung ausgelenkt ist.

2. Verfahren nach Anspruch 1, dadurch gekennzeichnet, daß der Neigungswinkel abhängig von der Bearbeitungsqualität eingestellt wird.

3. Verfahren nach Anspruch 2, dadurch gekennzeichnet, daß der Neigungswinkel beim letzen Feinbearbeitungsschritt gegen Null zurückgestellt wird.

4. Verfahren nach einem der vorhergehenden Ansprüche, dadurch gekennzeichnet, daß schichtweise in die Tiefe des Werkstückes (2) Material abgetragen wird.

5. Verfahren nach einem der vorhergehenden Ansprüche, dadurch gekennzeichnet, daß bei einer Prozeßentartung die Elektrode (1; 1'; 1'') in Richtung ihrer Längsachse von der Werkstückoberfläche abgehoben wird und anschließend im wesentlichen tangential zur Werkstückoberfläche auf die Werkstückoberfläche wieder aufgesetzt wird.

6. Verfahren nach einem der vorhergehenden Ansprüche, dadurch gekennzeichnet, daß die Elektrode (1; 1'; 1'') während der Bearbeitung in Zeitintervallen oder dauernd rotiert wird.

7. Verfahren nach Anspruch 6, dadurch gekennzeichnet, daß im Falle elektroerosiver Bearbeitung mit einer prismatischen Elektrode (1') die Elektrode (1') vor der Rotation von der Bearbeitungsfläche zurückgezogen wird.

8. Verfahren nach einem der vorhergehenden Ansprüche, dadurch gekennzeichnet, daß im Falle elektroerosiver Bearbeitung der Verschleiß der Elektrode (1; 1'; 1'') durch Bewegen der Elektrode (1; 1'; 1'') in Richtung ihrer Längsausrichtung kompensiert wird, wobei die Geschwindigkeit dieser Bewegung aus einer Berechnung und/oder einer Messung des Elektrodenverschleißes abgeleitet wird.

9. Verfahren nach einem der vorhergehenden Ansprüche, dadurch gekennzeichnet, daß die Elektrode (1; 1'; 1'') bei elektroerosiver oder elektrochemischer Bearbeitung in Vibration versetzt wird.

10. Verfahren nach einem der vorhergehenden Ansprüche, dadurch gekennzeichnet, daß im Falle elektroerosiver Bearbeitung die Elektrode (1; 1'; 1'') zentral gespült wird, wobei für die Spülung die Spülflüssigkeit durch die Elektrode (1; 1'; 1'') eingesaugt wird, und der Spüldruck gesteuert wird.

11. Verfahren nach einem der Ansprüche 1 bis 9, dadurch gekennzeichnet, daß die Dauer der Erosionsimpulse etwas geringer als die Durchlaufzeit einer Entladung gewählt wird, welche am Elektrodenzentrum entstehen und sich am Elektrodenrand selbständig löschen würde.

12. Verfahren nach einem der vorhergehenden Ansprüche, dadurch gekennzeichnet, daß die Erosionsspannung hinsichtlich einer Änderung der Lichtbogenspannung und/oder der überlagerten Spannungswelligkeit überwacht wird und bei Abweichung vom Sollwert der Erosionsimpuls gelöscht wird.

13. Verfahren nach einem der vorhergehenden Ansprüche, dadurch gekennzeichnet, daß die Abmessungen, die Form und/oder die Information über die Bewegung der Elektrode (1; 1'; 1'') von einem CAD-System entnommen und für die Steuerung der Werkzeugmaschine verwendet wird.

14. Vorrichtung für die elektroerosive oder elektrochemische Bearbeitung einer gekrümmten Fläche in einem Werkstück (2) mittels einer, im allgemeinen von der Form der gekrümmten Fläche unabhängigen Elektrode (1; 1'; 1''), mit:
- Mitteln zum Führen der Elektrode (1, 1'; 1'') entlang einer Vorschubrichtung (V) über die Werkstückoberfläche,
dadurch gekennzeichnet, daß die Vorrichtung ferner aufweist:
- Mittel zum Neigen der Längsachse der Elektrode (1; 1'; 1'') bei einer tangential zur Werkstückoberfläche verlaufenden Vorschubrichtung (V) derart gegen die Normale auf die Werkstückoberfläche, daß die Längsachse an ihrem dem Werkstück abgewandten Ende entgegen der Vorschubrichtung ausgelenkt ist.

15. Vorrichtung nach Anspruch 14, dadurch gekennzeichnet, daß die Mittel zum Neigen der Längsachse der Elektrode (1; 1'; 1'') und die Mittel zum Führen der Elektrode (1; 1'; 1'') wenigstens fünf Bewegungsfreiheitsgrade für die Bewegung der Elektrode (1; 1'; 1'') aufweisen.

16. Vorrichtung nach Anspruch 14 oder 15, dadurch gekennzeichnet, daß die Elektrode (1; 1'; 1'') von einer Elektrodenhalterung (5; 5') mit einem piezoelektrischem Translator (6) gehalten wird, welcher die Elektrode (1; 1'; 1'') in Vibration versetzen kann.

17. Vorrichtung nach einem der Ansprüche 14 bis 16, dadurch gekennzeichnet, daß die Elektrode (1; 1'; 1'') mit einer seitlichen Isolationsschicht (12) beschichtet ist.
